# EUROPEAN PATENT SPECIFICATION

(11) **EP 3 318 733 B1**
(45) Date of publication and mention of the grant of the patent: **06.07.2022**
(21) Application number: 17195938.0
(22) Date of filing: 11.10.2017
(51) Int. Cl.: F01K 23/10, F22G 5/12

(54) **FEEDWATER BYPASS SYSTEM FOR A DESUPERHEATER**
SPEISEWASSERBYPASSSYSTEM FÜR EINEN DAMPFÜBERHITZER
SYSTÈME DE DÉRIVATION D'EAU D'ALIMENTATION POUR UN DÉSURCHAUFFEUR

(30) Priority: 18.10.2016 US 201615296273
(43) Date of publication of application: 09.05.2018
(73) Proprietor: General Electric Technology GmbH, 5400 Baden (CH)
(72) Inventor: SALA, Luca, 5400 Baden (CH); NAGASAYANAM, Anand, 5400 Baden (CH)
(74) Representative: Novagraaf Group

(56) References cited:
- EP-A2- 2 604 858
- DE-A1-102013 202 249
- US-A1- 2012 198 845
- US-A1- 2014 096 535

## Description

### TECHNICAL FIELD

The invention relates to a combined cycle system using a gas turbine engine and more particularly relate to a feedwater bypass system for use with a desuperheater of a heat recovery steam generator for increased cooling capacity.

### BACKGROUND OF THE INVENTION

A combined cycle power generation system uses a combination of a gas turbine and a steam turbine to produce electrical power and/or otherwise to drive a load. Specifically, a gas turbine cycle may be operatively combined with a steam turbine cycle by way of a heat recovery steam generator. The heat recovery steam generator may be a multi-section heat exchanger that allows feedwater for the steam generation process to be heated and expanded by the hot combustion gases of the gas turbine exhaust. The primary efficiency of the combined cycle system arrangement is the utilization of the otherwise "wasted" heat of the hot combustion gases from the gas turbine. Power plant operators thus aim to generate the maximum possible useful work from the heat in the gas turbine exhaust.

A combined cycle system may include a desuperheater positioned between a final stage of a high pressure superheater of the heat recovery steam generator and one of the sections of the steam turbine. The desuperheater may control the temperature of the steam leaving the final stage of the superheater. The desuperheater injects a water spray into the main steam flow. A straight pipe length for the water flow thus may be required to ensure sufficient water vaporization before reaching a first pipe elbow. If proper vaporization of the water spray is not achieved before reaching the first elbow of the main steam pipe downstream of the desuperheater, erosion may occur due to water impingement. Such erosion issues further may be increased due to plant upgrades or changes in the overall plant operating concept such as fast start up to fulfill grid requirements and the like. The determination of the minimum length of this straight pipe may depend on the minimum residence time required for the flow. This time may be a function of the amount of water injected as well as the velocity of the water. As the water flow increases, the length of the straight pipe required to ensure complete water vaporization also may increase.

Typically, the water injection flow is extracted from an economizer of the heat recovery steam generator. The cooling capacity of the desuperheater may be increased by using only cold water. Using cold water, however, may result in a higher thermal shock being transferred to the thermal liner downstream of the desuperheater as well as to the pipe metal surfaces. The consequence of such higher thermal shock may be an increased probability of pipe cracks and other damage. US2014/096535A1 discloses a gas turbine system including a gas turbine engine producing a flow of exhaust gases, a heat recovery steam generator with a reheater and an evaporator in communication with the flow of exhaust gases, and a gas flow control system for diverting a first portion of the flow of exhaust gases away from the reheater and towards the evaporator. EP2604858A2 discloses a combined cycle power generation system using solar heat in which a solar heat collector is combined with a gas turbine exhaust heat recovery type combined cycle thermal power generation system which generates steam by recovering exhaust heat of a gas turbine and rotates a steam turbine by the generated steam, and steam is further generated by the solar heat collected by the solar heat collector to increase the output of the steam turbine.

### SUMMARY OF THE INVENTION

The herein claimed invention relates to a combined cycle system as set forth in claim 1.

The herein claimed invention further relates to a method of controlling a temperature of a flow of superheated steam from a heat recovery steam generator in a desuperheater, as set forth in claim 11.

The combined cycle system may include a heat recovery steam generator with an economizer and a superheater.

### BRIEF DESCRIPTION OF THE DRAWINGS

Fig. 1 is a schematic diagram of a combined cycle system including a gas turbine engine, a heat recovery steam generator, and a steam turbine.
Fig. 2 is a schematic diagram of a high pressure section of a heat recovery steam generator with a final stage desuperheater.
Fig. 3 is a schematic diagram of a feedwater bypass system for use with the desuperheater as may be described herein.

### DETAILED DESCRIPTION

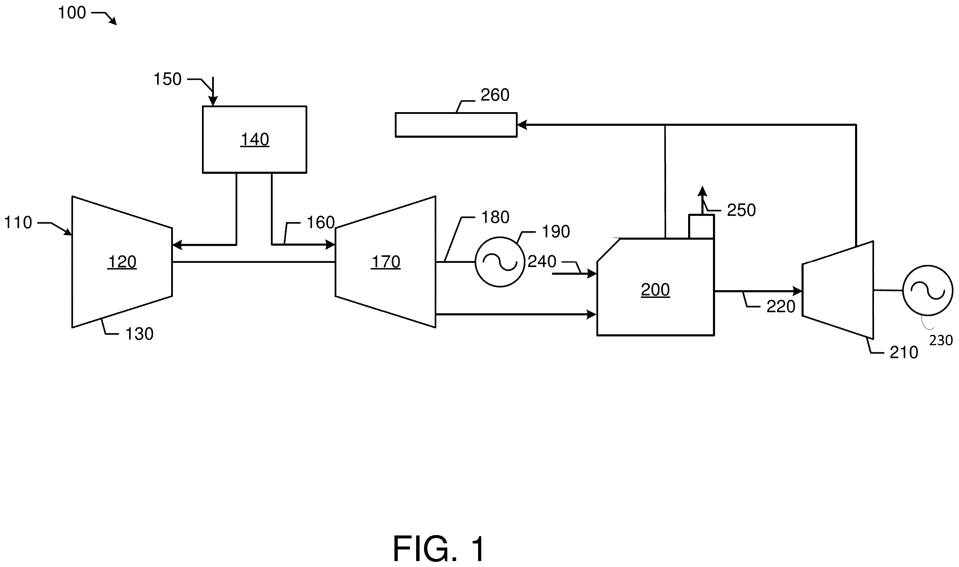

Referring now to the drawings, in which like numerals refer to like elements throughout the several views. Fig. 1 is a schematic diagram of exemplary combined cycle system 100. The combined cycle system 100 includes a gas turbine engine 110. The gas turbine engine 110 may include a compressor 120. The compressor 120 compresses an incoming flow of air 130. The compressor 120 delivers the compressed flow of air 130 to a combustor 140. The combustor 140 mixes the compressed flow of air 130 with a pressurized flow of fuel 150 and ignites the mixture to create a flow of combustion gases 160. Although only a single combustor 140 is shown, the gas turbine engine 110 may include any number of combustors 140 positioned in a circumferential array and the like. The flow of combustion gases 160 is in turn delivered to a turbine 170. The flow of combustion gases 160 drives the turbine 170 so as to produce mechanical work. The mechanical work produced in the turbine 170 drives the compressor 120 via a shaft 180 and an external load 190 such as an electric generator and the like.

The gas turbine engine 110 may use natural gas, various types of syngas, liquid fuels, and/or other types of fuels and blends thereof. The gas turbine engine 110 may have different configurations and may use other types of components. Other types of gas turbine engines also may be used herein. Multiple gas turbine engines, other types of turbines, and other types of power generation equipment also may be used herein together.

The combined cycle system 100 also may include at least one heat recovery steam generator 200 and a steam turbine 210. The heat recovery steam generator 200 may recover heat from the combustion gases 160 exiting the gas turbine engine 110 to create a flow of steam 220 for expansion in the steam turbine 210. The steam turbine 210 may drive a further load 230 such as electrical generator and the like. The heat recovery steam generator 200 may have one or more pressure sections, such as a high pressure section, an intermediate pressure section, and a low pressure section. Each pressure section may include any combination of evaporators, superheaters and/or economizers. Each of these components typically includes a bundle of tubes across which the combustion gases 160 flow, transferring heat from the combustion gases 160 to a heat exchange fluid 120 such as water flowing through the tubes. For example, the evaporator may include feedwater flowing through the tubes and the combustion gases 160 may cause the feedwater to turn to steam. The superheater may include steam flowing through the tubes and the combustion gases 160 may heat the steam to create superheated steam. The economizer may include feedwater flowing through the tubes and the hot combustion gases 160 may preheat the feedwater for use in the evaporator. The combustion gases 160 may exit the heat recovery steam generator 200 as a cooled exhaust gas 250. The steam 220 may be extracted from the steam turbine 210 and supplied to a heating and cooling application 260. Similarly, the steam 220 may be extracted from the heat recovery steam generator 200 and supplied to the heating and cooling application 260.

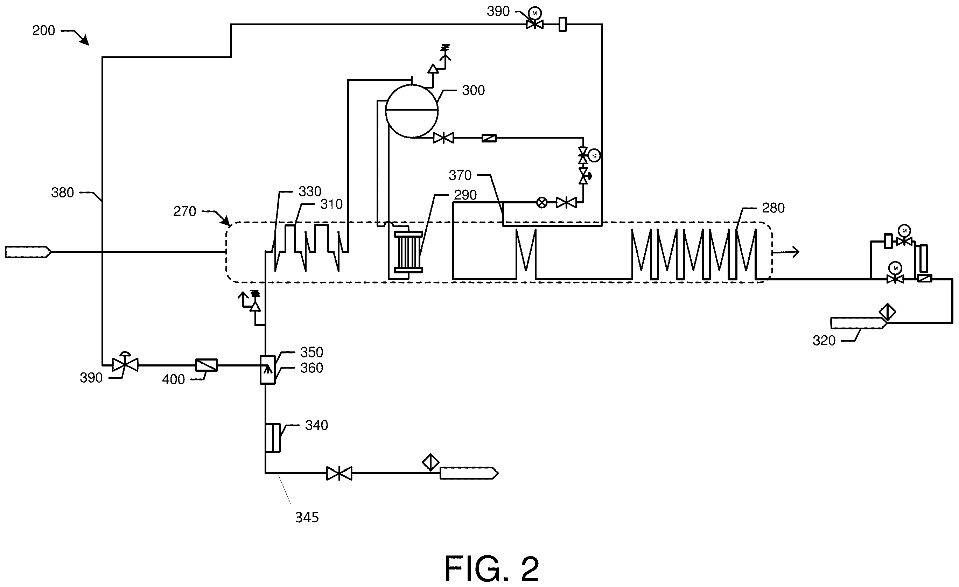

Fig. 2 shows a schematic diagram of exemplary high pressure section 270 of the heat recovery system generator 200. The high pressure section 270 may include a high pressure economizer 280, a high pressure evaporator 290 with a high pressure drum 300, and a high pressure superheater 310. The high pressure section 270 receives a flow of the combustion gases 160 from the gas turbine engine 110 and the flow of the feedwater 240 from a high pressure feedwater system 320. The flow of steam 220 exits a final stage 330 of the high pressure superheater 310 and may be routed to the steam turbine 210 via a steam pipe 340.

A desuperheater 350 may be positioned about the steam pipe 340 between the final stage 330 of the high pressure superheater 310 and the steam turbine 210. As described above, the desuperheater 350 provides a cooling flow 360 to the flow of steam 220 leaving the final stage 330 of the high pressure superheater 310 to control the temperature thereof. The steam pipe 340 generally requires an elbow 345 at a certain distance from the high pressure superheater 310. The cooling flow 360 may be an extraction from the high pressure economizer 280 and the like. An extraction line 380 may include a number of valves 390, flow controllers 400, and the like thereon.

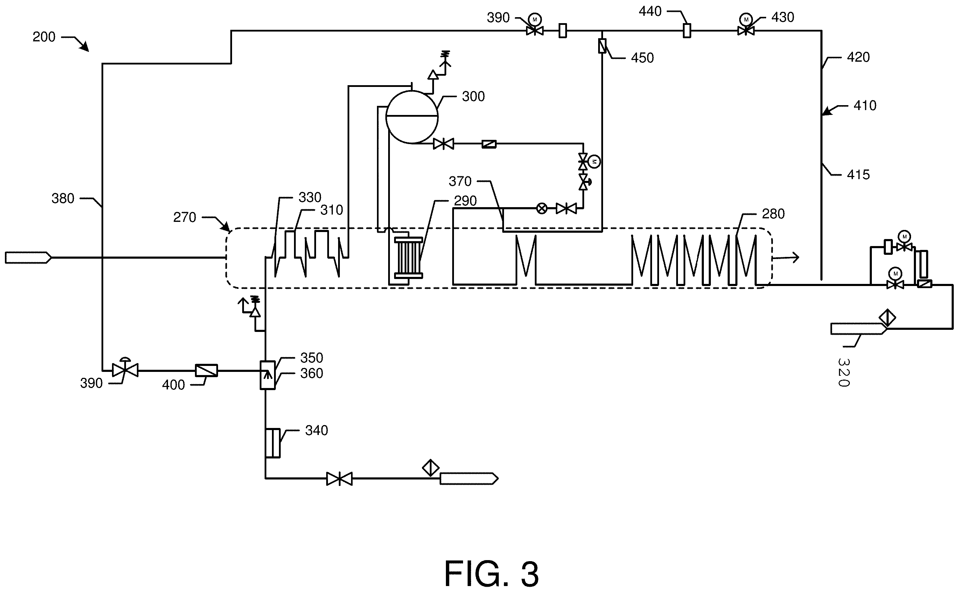

Fig. 3 shows the high pressure section 270 of the heat recovery steam generator 200 with a feedwater bypass system 410 as may be described herein. The feedwater bypass system 410 may include a bypass extraction 415 in a bypass extraction line 420. The bypass extraction line 420 may extend from upstream of the high pressure economizer 280 or elsewhere and may tie into the desuperheater extraction line 380. Alternatively, the bypass extraction line 380 may be in direct communication with the desuperheater 350. The bypass extraction line 420 may include a number of bypass valves 430, bypass flow controllers 440, and/or bypass flow controllers 450. Other components and other configurations may be used herein.

The feedwater bypass system 410 thus provides the cooling flow 360 to the desuperheater 350 from more than one extraction point. In this example, the cooling flow 360 may be extracted from upstream of the high pressure economizer 280. This flow may then be mixed with the cooling flow 360 extracted from the high pressure economizer 280. The temperature of the required cooling water for the cooling flow 360 at the desuperheater 350 thus may be adjusted by mixing these different water sources. The feedwater bypass system 410 thus ensures the required temperature set point at the outlet of the desuperheater 350 while increasing the cooling capacity of the desuperheater without increasing the water injection flow. Moreover, the feedwater bypass system 410 increases the capacity of the desuperheater 350 without increasing the risk of water impingement by reducing the water injection temperature. The flows may be mixed to meet the required specifications of water temperature set point, absolute minimum water flow, and the like. The use of the feedwater bypass system 410 may be variable depending upon operational parameters.

The feedwater bypass system 410 thus offers a cost saving benefit in the case of a retrofit because the system does not require any change to the existing desuperheater 350. More than one bypass extraction line may be used. For example, in addition to the feedwater line, the condensate line, the demi water line, and the like may be used. The existing desuperheater 350 may be used in, for example, a plant upgrade while the feedwater bypass system 410 provides increased cooling capacity without increasing the amount of injected water. Likewise, the feedwater bypass system 410 may limit the risk of pipe erosion and cracks due to a high water injection flow.

## Claims

1. A combined cycle system (100), comprising:
a heat recovery steam generator (200);
a feedwater source (320) positioned upstream of the heat recovery steam generator (200);
a desuperheater (350) positioned downstream of the heat recovery steam generator (200);
a first extraction (370) from the heat recovery steam generator (200) to the desuperheater (350); **characterised by** said combined cycle system (100) comprising
a second extraction (415) from upstream of the heat recovery steam generator (200) to the desuperheater (350).

2. The combined cycle system (100) of claim 1, wherein the heat recovery steam generator (200) comprises a high pressure section (270).

3. The combined cycle system (100) of claim 1 or claim 2, wherein the heat recovery steam generator (200) comprises an economizer (280).

4. The combined cycle system (100) of claim 3, wherein the first extraction (370) comprises a first extraction from the economizer (280) to the desuperheater (350).

5. The combined cycle system (100) of any preceding claim, wherein the heat recovery steam generator (200) comprises a superheater (310).

6. The combined cycle system (100) of claim 5, wherein the desuperheater (350) is positioned downstream of a final stage (330) of the superheater (310) of the heat recovery steam generator (200).

7. The combined cycle system (100) of any preceding claim, further comprising a steam turbine (210) downstream of the desuperheater (350).

8. The combined cycle system (100) of any preceding claim, wherein the second extraction (415) comprises a feedwater flow.

9. The combined cycle system (100) of any preceding claim, wherein the second extraction (415) comprises a bypass extraction line (420) in communication with the first extraction (370).

10. The combined cycle system (100) of any preceding claim, wherein the second extraction (415) comprises a bypass valve (430), a bypass flow controller (450), and/or a bypass flow meter (440).

11. A method of controlling a temperature of a flow of superheated steam (220) from a heat recovery steam generator (200) in a desuperheater (350), comprising:
flowing steam (220) from a superheater (310) of the heat recovery steam generator (200) to the desuperheater (350);
receiving a first extraction (370) from an economizer (280) of the heat recovery steam generator (200) to the desuperheater (350); **characterised by**
variably receiving a bypass extraction (415) of feedwater from upstream of the heat recovery steam generator (200) to the desuperheater (350).

## Patentansprüche

1. Kombikraftwerk (100), umfassend:
einen Wärmerückgewinnungsdampfgenerator (200);
eine Speisewasserquelle (320), die stromaufwärts des Wärmerückgewinnungsdampfgenerators (200) positioniert ist;
einen Enthitzer (350), der stromabwärts des Wärmerückgewinnungsdampfgenerators (200) positioniert ist;
eine erste Extraktion (370) aus dem Wärmerückgewinnungsdampfgenerator (200) zum Enthitzer (350), **gekennzeichnet durch** das Kombikraftwerk (100), umfassend
eine zweite Extraktion (415) von stromaufwärts des Wärmerückgewinnungsdampfgenerators (200) zum Enthitzer (350).

2. Kombikraftwerk (100) nach Anspruch 1, wobei der Wärmerückgewinnungsdampfgenerator (200) einen Hochdruckabschnitt (270) umfasst.

3. Kombikraftwerk (100) nach Anspruch 1 oder Anspruch 2, wobei der Wärmerückgewinnungsdampfgenerator (200) einen Economizer (280) umfasst.

4. Kombikraftwerk (100) nach Anspruch 3, wobei die erste Extraktion (370) eine erste Extraktion aus dem Economizer (280) zum Enthitzer (350) umfasst.

5. Kombikraftwerk (100) nach einem der vorstehenden Ansprüche, wobei der Wärmerückgewinnungsdampfgenerator (200) einen Überhitzer (310) umfasst.

6. Kombikraftwerk (100) nach Anspruch 5, wobei der Enthitzer (350) stromabwärts einer letzten Stufe (330) des Überhitzers (310) des Wärmerückgewinnungsdampfgenerators (200) positioniert ist.

7. Kombikraftwerk (100) nach einem der vorstehenden Ansprüche, ferner umfassend eine Dampfturbine (210) stromabwärts des Enthitzers (350).

8. Kombikraftwerk (100) nach einem der vorstehenden Ansprüche, wobei die zweite Extraktion (415) einen Speisewasserstrom umfasst.

9. Kombikraftwerk (100) nach einem der vorstehenden Ansprüche, wobei die zweite Extraktion (415) eine Bypass-Extraktionsleitung (420) in Kommunikation mit der ersten Extraktion (370) umfasst.

10. Kombikraftwerk (100) nach einem der vorstehenden Ansprüche, wobei die zweite Extraktion (415) ein Bypass-Ventil (430), eine Bypass-Strömungssteuerung (450) und/oder einen Bypass-Durchflussmesser (440) umfasst.

11. Verfahren zum Steuern einer Temperatur eines Stroms von überhitztem Dampf (220) aus einem Wärmerückgewinnungsdampfgenerator (200) in einem Enthitzer (350), umfassend:
strömender Dampf (220) aus einem Überhitzer (310) des Wärmerückgewinnungsdampfgenerators (200) zum Enthitzer (350);
Empfangen einer ersten Extraktion (370) aus einem Economizer (280) des Wärmerückgewinnungsdampfgenerators (200) zum Enthitzer (350); **gekennzeichnet durch**
variables Empfangen einer Bypass-Extraktion (415) von Speisewasser von stromaufwärts des Wärmerückgewinnungsdampfgenerators (200) zum Enthitzer (350).

## Revendications

1. Système à cycle combiné (100), comprenant :
un générateur de vapeur à récupération de chaleur (200) ;
une source d'eau d'alimentation (320) positionnée en amont du générateur de vapeur à récupération de chaleur (200) ;
un désurchauffeur (350) positionné en aval du générateur de vapeur à récupération de chaleur (200) ;
une première extraction (370) allant du générateur de vapeur à récupération de chaleur (200) au désurchauffeur (350) ; **caractérisé par** ledit système à cycle combiné (100) comprenant
une deuxième extraction (415) allant d'en amont du générateur de vapeur à récupération de chaleur (200) au désurchauffeur (350).

2. Système à cycle combiné (100) selon la revendication 1, dans lequel le générateur de vapeur à récupération de chaleur (200) comprend une section à haute pression (270).

3. Système à cycle combiné (100) selon la revendication 1 ou la revendication 2, dans lequel le générateur de vapeur à récupération de chaleur (200) comprend un économiseur (280).

4. Système à cycle combiné (100) selon la revendication 3, dans lequel la première extraction (370) comprend une première extraction allant de l'économiseur (280) au désurchauffeur (350).

5. Système à cycle combiné (100) selon une quelconque revendication précédente, dans lequel le générateur de vapeur à récupération de chaleur (200) comprend un surchauffeur (310).

6. Système à cycle combiné (100) selon la revendication 5, dans lequel le désurchauffeur (350) est positionné en aval d'un étage final (330) du surchauffeur (310) du générateur de vapeur à récupération de chaleur (200).

7. Système à cycle combiné (100) selon une quelconque revendication précédente, comprenant en outre une turbine à vapeur (210) en aval du désurchauffeur (350).

8. Système à cycle combiné (100) selon une quelconque revendication précédente, dans lequel la deuxième extraction (415) comprend un écoulement d'eau d'alimentation.

9. Système à cycle combiné (100) selon une quelconque revendication précédente, dans lequel la deuxième extraction (415) comprend une ligne d'extraction de dérivation (420) en communication avec la première extraction (370).

10. Système à cycle combiné (100) selon une quelconque revendication précédente, dans lequel la deuxième extraction (415) comprend une vanne de dérivation (430), un contrôleur d'écoulement de dérivation (450), et/ou un débitmètre de dérivation (440).

11. Procédé de commande d'une température d'un écoulement de vapeur surchauffée (220) à partir d'un générateur de vapeur à récupération de chaleur (200) dans un désurchauffeur (350), comprenant :
l'écoulement de vapeur (220) à partir d'un surchauffeur (310) du générateur de vapeur à récupération de chaleur (200) vers le désurchauffeur (350) ;
la réception d'une première extraction (370) allant d'un économiseur (280) du générateur de vapeur à récupération de chaleur (200) au
désurchauffeur (350) ; **caractérisé par**
la réception variable d'une extraction de dérivation (415) d'eau d'alimentation allant d'en amont du générateur de vapeur à récupération de chaleur (200) au désurchauffeur (350).
